# EUROPEAN PATENT APPLICATION

(11) **EP 2 763 348 A1**
(43) Date of publication of application: **06.08.2014**
(21) Application number: 12797549.8
(22) Date of filing: 11.04.2012
(51) Int. Cl.: H04L 12/00

(54) **METHOD, SYSTEM AND DEVICE FOR SUPPORTING APPLICATION CLIENT ALWAYS ONLINE**

(30) Priority: 15.11.2011 CN 201110360998
(71) Applicant: Huawei Technologies Co., Ltd, Shenzhen, Guangdong 518129 (CN)
(72) Inventor: ZHONG, Qitao, Shenzhen Guangdong 518129 (CN)
(74) Representative: Körber, Martin Hans
(86) International application number: PCT/CN2012/073778
(87) International publication number: WO 2012/167664

(57) **Abstract**

A method supporting an application client being always online is provided, and the method includes:
establishing a long link between an always online engine AOE (101) located in a terminal (10) and an always online service gateway AOG (20) located at a network side, where at least two application clients each communicate with one or more application servers (04, 05) through the long link; and in the process of establishing the long link, providing, by a user management server (30) at the network side, routing information for the AOE (101), and providing authentication information for the AOG (20).

## Description

This application claims priority to Chinese Patent Application No. 201110360998.2, filed with the Chinese Patent Office on November 15, 2011 and entitled "METHOD, SYSTEM AND DEVICE FOR SUPPORTING APPLICATION CLIENT BEING ALWAYS ONLINE", which is incorporated herein by reference in its entirety.

### FIELD OF THE INVENTION

The present invention relates to the field of communications, and in particular, to a method, system and device for supporting an application client being always online.

### BACKGROUND OF THE INVENTION

A large number of "always online" applications exist on an intelligent terminal. In this type of application, the terminal, through an actively initiated PULL manner, actively establishes a link with a server periodically to update a status, so that a large number of repeated short PULL messages are generated, for example, an always online application such as instant messaging IM, social network service SNS, and VOIP needs a client to frequently send a "keep alive" message to inform of a service online status; for another example, the IM and SNS applications need clients to frequently Pull messages to update friends' statuses; PushMail needs periodic synchronization and refresh; iAD advertisement push and location tracking services of iphone4 all need to consume a large amount of communication resources, and so on.

In order to keep an application always online, one or more application servers at least need to maintain a permanent link between the server and a user terminal. A link between a terminal and one or more application servers is unstable, for example, NAT and a firewall exist on the link, and an IP address of the user may change, and therefore, the link needs to be maintained through frequent heartbeats, and a user status (presence information) is obtained.

Generally, when the terminal performs normal data communications, a network allocates a dedicated physical channel to the terminal for uplink/downlink wireless transmission of data, and this state is referred to as a DCH (Dedicated CHannel dedicated channel) state. When no data transmission exists, the terminal may be in an Idle state, and in the Idle state, all links are closed in an access layer, and the terminal only monitors paging information. Therefore, in the DCH and Idle states, power consumption of the terminal varies dramatically. For an intelligent terminal, based on the consideration of power saving, generally when no data transmission exist for 6-8 seconds, the cell phone enables "fast dormancy" to force switching to the Idle state. However, the "always online" application always needs to perform heartbeat link with a server end. Therefore, the terminal frequently switches between the Idle state and the DCH state, and when converting from the Idle state to the DCH activated state, 32 pieces of signaling are needed for a wireless side to restore the link, and the frequent switching between states results in great impact on signaling at the wireless side.

### SUMMARY OF THE INVENTION

In an implementation of the present invention, a method for supporting an application client being always online is provided. A long link is established between an always online engine AOE (101) in a terminal (10) and an always online service gateway AOG (20) at a network side, where at least two application clients each communicate with one or more application servers (04, 05) through the long link. A user management server (30) at the network side provides routing information for the AOE (101), where the AOE (101) requests establishment of the long link according to the routing information. The user management server (30) is further configured to provide authentication information for the AOG (20) during the process of establishing the long link.

Preferably, the user management server (30) acquires and stores correspondence between terminal identity information and user identity information, and stores an address of a home AOG (20) of the user identity information. When the AOE (101) sends a routing information request carrying the terminal identity information, the user management server (30) provides the AOE (101) with the address of the home AOG of the user identity information according to the correspondence between the terminal identity information and the user identity information, and the address of the home AOG (20) of the user identity information. When the AOG (20) sends an authentication information request, the user management server (30) provides the AOG (20) with the user identity information according to the terminal identity information in the authentication information request and the correspondence between the terminal identity information and the user identity information.

Preferably, the terminal identity information is IMSI information, and the user identity information is a cell phone number.

Preferably, the process that the user management server (30) at the network side provides the routing information for the AOE (101) and provides the authentication information for the AOG (20) specifically includes:

When the always online engine AOE (101) is started or it is detected that ISMI information in an SIM card is different from information registered last time, the AOE (101) automatically sends a reporting message to the user management server (30), where the reporting message carries the IMSI information and the cell phone number. The user management server (30) acquires, according to the received reporting message, the IMSI information and the cell phone number, and stores the correspondence between the cell phone number and the IMSI information. The AOE (101) sends a routing information request to the user management server (30), where the routing information request carries the IMSI information. The user management server (30) finds a corresponding cell phone number according to the IMSI information in the received routing information request, and returns the address of the home AOG (20) of the cell phone number to the AOE (101) according to a pre-stored address of the home AOG of the cell phone number. The always online engine AOE (101) initiates a registration request to the home AOG (20) of the cell phone number, where the registration request carries the IMSI information. After receiving the registration request of the AOE (101), the AOG (20) determines whether the IMSI information included in the registration request has been registered with the AOG (20), and if not registered, sends an authentication information request to the user management server (30), where the authentication information request carries the IMSI information that is in the registration request. After receiving the authentication information request, the user management server (30) returns the cell phone number corresponding to the IMSI information according to the stored correspondence between the cell phone number and the IMSI information. When the AOG (20) determines that the cell phone number is in a service range of the AOG (20), the AOG (20) stores the cell phone number, and returns a registration response to the AOE (101).

Preferably, the reporting message is a short message, the reporting message carrying the IMSI information and the cell phone number specifically includes: content of the short message includes the IMSI information, and a sender of the short message is the cell phone number.

Preferably, the terminal identity information is terminal device identification, and the user identity information is a user name or user identification.

In another implementation of the present invention, a system for supporting an application client being always online is provided. The system includes: an always online engine AOE (101), located in a terminal (10), and in communication connection with at least two application clients; an always online service gateway AOG (20), located at a network side, and in communication connection with one or more application servers (04, 05) at the network side; where the always online engine AOE (101) and the always online service gateway AOG (20) are configured to establish a long link, and the at least two application clients each communicate with the one or more application servers (04, 05) through the long link; a user management server (30), located at the network side, in communication connection with the always online engine AOE (101) and the always online service gateway AOG (20), and configured to provide routing information for the AOE (101) so that the AOE (101) requests establishment of the long link according to the routing information, and further provide authentication information for the AOG (20) during the process that the AOE (101) and the AOG (20) establish the long link.

Preferably, the user management server (30), is specifically configured to: acquire and store the correspondence between terminal identity information and user identity information, and store an address of an home AOG (20) of the user identity information; when the AOE (101) sends a routing information request carrying the terminal identity information, provide the AOE (101) with the address of the home AOG of the user identity information according to the corresponding relationship between the terminal identity information and the user identity information, and the address of the home AOG (20) of the user identity information; when the AOG (20) sends an authentication information request, provide the user identity information for the AOG (20) according to the terminal identity information in the authentication information request and the correspondence between the terminal identity information and the user identity information.

Preferably, the terminal identity information is IMSI information, and the user identity information is a cell phone number. The AOE (101) is specifically configured to: when the always online engine AOE (101) is started or it is detected that ISMI information in an SIM card is different from information registered last time, automatically send a reporting message to the user management server (30), where the reporting message carries the IMSI information and the cell phone number; send a routing information request to the user management server (30), where the routing information request carries the IMSI information; and initiate a registration request to the home AOG (20) of the received cell phone number, where the registration request carries the IMSI information. The user management server (30) is specifically configured to: acquire the IMSI information and the cell phone number according to the received reporting message, store the correspondence between the cell phone number and the IMSI information; find a corresponding cell phone number according to the IMSI information in the received routing information request, and return an address of the home AOG (20) of the cell phone number to the AOE (101) according to the pre-stored address of the home AOG of the cell phone number; and after receiving the authentication information request, return the cell phone number corresponding to the IMSI information according to the stored correspondence between the cell phone number and the IMSI information. The AOG (20) is specifically configured to: after receiving the registration request of the AOE (101), determine whether the IMSI information included in the registration request has been registered in the AOG (20), and if not registered, send an authentication information request to the user management server (30), where the authentication information request carries the IMSI information that is in the registration request, and receive the returned cell phone number corresponding to the IMSI information; and when it is determined that the cell phone number is in a service range of the AOG (20), store the cell phone number, and returns a registration response to the AOE (101).

In other implementations, the always online engine AOE (101), the always online service gateway AOG (20), and the user management server (30) that are capable of executing related steps of the foregoing method are provided correspondingly.

In a system for supporting an application client being always online of another implementation of the present invention, an always online engine AOE (101), located in a terminal (10) and in communication connection with at least two application clients, is configured to establish a long link with an always online service gateway AOG (20); the always online service gateway AOG (20), located at a network side, is configured to establish the long link with the always online engine AOE (101), and initiate a heartbeat message, so as to maintain the long link; where, the at least two application clients communicate with the one or more application servers (04, 05) through the long link.

Preferably, each of the AOE (101) and the AOG (20) may actively break the long link according to its own judgement.

Preferably, the always online engine AOE (101) is further configured to: when it is determined that no other heartbeat request is received when a time threshold expires after the heartbeat request is received, actively send a break request to the AOG (20); or, when it is determined that all application clients managed by the AOE (101) do not run in a certain time threshold, actively send a break request to the AOG (20); or, when it is determined that a battery level of the terminal(10) is lower than a certain threshold, actively send a break request to the AOG (20), where the break request is used to break the long link.

Preferably, the AOG (20) is further configured to: when it is determined that when no data stream sent from the AOE(101) is received after a certain time threshold is exceeded, actively initiate a break request; and when it is determined that no response from the AOE(101) is received after a certain threshold of numbers of sending the heartbeat request is exceeded, actively initiate a break request, where the break request is used to break the long link.

Preferably, the AOG (20) is further configured to modify an online status of the AOE(101), which is recorded on the AOG (20), to be offline, where the AOE(101) has broken the long link, and construct an offline notification message for being sent to the application server.

Preferably, the AOG (20) is further configured to send a wake-up short message to the AOE (101) in a special situation, so as to wake up a long link that has not been established or has been broken.

Preferably, the AOE (101) is further configured to: after monitoring and intercepting the wake-up short message, parse the wake-up short message, and trigger establishment of the long link.

In a system for supporting an application client being always online of another implementation of the present invention, an always online engine AOE (101), located in a terminal (10) and in communication connection with at least two application clients, is configured to establish a long link with an always online service gateway AOG (20); where, the at least two application clients communicate with one or more application servers (04) through the long link; and the AOE (101) is further configured to: when the long link is normal (has been established successfully), if an application client in the terminal (10) that has exited receives data,where the data is forwarded by the AOG (20) and sent to the application client, pull the exited application client.

In a system for supporting an application client being always online of another implementation of the present invention, an always online engine AOE (101), located in a terminal (10) and in communication connection with at least two application clients, is configured to establish a long link with an always online service gateway AOG (20); where, the at least two application clients communicate with one or more application servers 04 through the long link; and the AOE (101) is further configured to: when the application client has a large amount of data that need interact with one of the application servers, provide a separated connection to perform interaction with the application server, where an original long link may be mainly used to transmit data related to a control stream.

Preferably, when transferred data reaches a threshold, a dedicated IP agent channel needs to be established, and the channel exclusively transmit the transferred data. Generally, the data is a data stream generated during the process of providing an application.

Preferably, the IP agent channel may be actively closed when data transfer ends.

Preferably, for the application client or application server that does not actively close the IP agent channel, the AOE (101) may set a timeout mechanism, and after the time without data interaction reaches a threshold (for example, 60s), the AOE (101) actively breaks the link.

In other implementations of the present invention, a corresponding method executed by the foregoing system, and the corresponding AOE (101), terminal (10), and AOG (20) are provided.

Through different implementations as described in the foregoing, a system, method and device for supporting an application client being always online are provided, which save communication resources.

### BRIEF DESCRIPTION OF THE DRAWINGS

FIG. 1 is a schematic diagram of an application environment of an implementation of the present invention;
FIG. 2a is an architectural diagram of a system including an implementation of a user management server;
FIG. 2b is a flow chart of a method of an implementation in which a system including a user management server establishes a long link;
FIG. 3a is a flow chart of an implementation of a method of establishing a long link by taking a provider communication system as an example;
FIG. 3b is a flow chart of an implementation of a method of updating an application client;
FIG. 4a is an architectural diagram of an implementation about long link heartbeat maintenance;
FIG. 4b is a flow chart of an implementation about a long link heartbeat maintaining method;
FIG. 5a is a flow chart of a method of an implementation of heartbeat maintenance of the long link from the perspective of the AOE (101);
FIG. 5b is a flow chart of a method of an implementation of heartbeat maintenance of the long link from the perspective of the AOG (20);
FIG. 6 is an architectural diagram of a system including an implementation of an expansion function;
FIG. 7 is a flow chart of a method of an implementation of waking up the long link;
FIG. 8 is a flow chart of a method of an implementation of waking up the application client;
FIG. 9 is a schematic structural diagram of an implementation of a terminal;
FIG. 10 is a schematic structural diagram of an implementation of a AOG (20); and
FIG. 11 is a schematic structural diagram of an implementation of a user management server (30) in a system.

### DETAILED DESCRIPTION OF THE EMBODIMENTS

For clarity of each implementation of the present invention, terms that may possibly be used are explained as follows:
AOG: AOG (Always Online Gateway), an always online gateway may provide a universal PUSH channel for an SP through the cooperation of an always online engine, so as to allow an SP server to find a terminal anywhere at anytime.
AOE (101): AOE (101) (Always Online Engine), the always online engine is an intermediate member deployed at the terminal side, and configured to converge and act as an agent for the requirement of being always online of an application client.
AOI: AOI (Always Online Infrastructure), an always online infrastructure includes the AOE (101) and the AOG, or further includes a set of network elements such as a user management server.

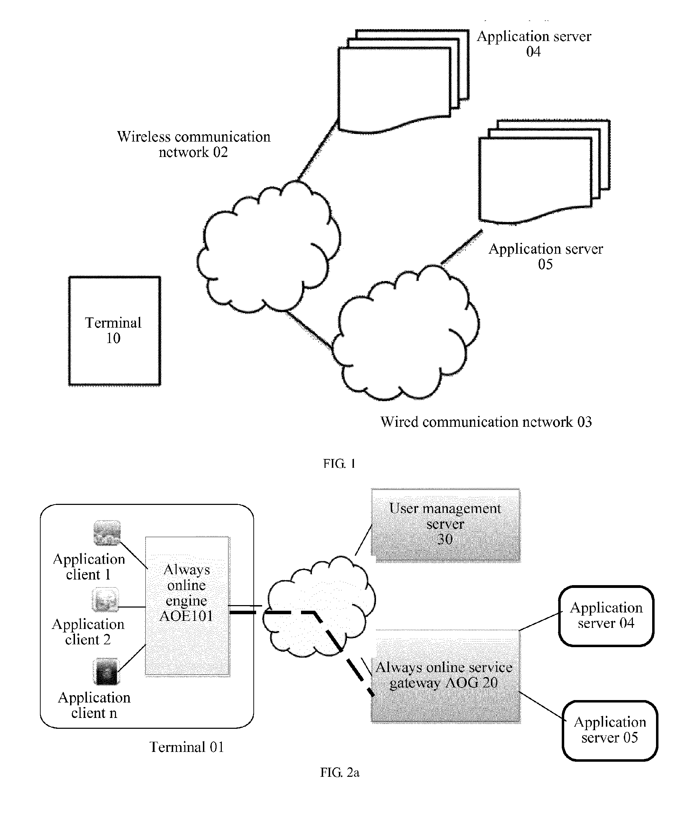

FIG. 1 shows a schematic diagram of an application environment system of an implementation of the present invention, and the system includes multiple communication devices that communicate with each other through a wired or wireless network. The communication networks include, but not limited to, a mobile communication network (mobile telephone network), a wireless local area network (wireless Local Area Network (LAN)), a bluetooth network (Bluetooth personal area network), and Ethernet network (Ethernet LAN), a token ring local area network (a token ring LAN), a wide area network (a wide area network), the Internet (the Internet,) and so on.

In the system shown in FIG. 1, a terminal (10) may include, but not limited to, a mobile device (mobile device), a PDA device capable of mobile communication (a combination PDA and mobile telephone), a PDA, an integrated messaging device (integrated messaging device (IMD)), a personal computer (personal computer) and a notebook computer (notebook computer). The terminals may be mobile, and may be located at a movable device, for example, but not limited to, a car, a truck, a taxi, a ship, a plane, a bicycle, a motorcycle, and so on. The terminal (10) may access one or more application servers 04 through the wireless network and/or the wired network, so as to acquire an application provided by the one or more application servers 04. The one or more application servers include, but not limited to, and the foregoing network may include other various types of communication devices.

The communication devices may implement a communication process based on different transmission technologies, including, but not limited to, code division multiple access Code Division Multiple Access (CDMA), global system for mobile communications Global System for Mobile Communications (GSM), universal mobile telecommunications system Universal Mobile Telecommunications System (UMTS), time division multiple access Time Division Multiple Access (TDMA), frequency division multiple access Frequency Division Multiple Access (FDMA), transmission control protocol/Internet protocol Transmission Control Protocol/Internet Protocol (TCP/IP), short messaging service Short Messaging Service (SMS), multimedia messaging service Multimedia Messaging Service (MMS), e-mail, Instant messaging service Instant Messaging Service (IMS), bluetooth Bluetooth, IEEE 802.11, and so on. Different media resources may be used between the above communication devices, where the media resources includes, but not limited to, radio (radio), infrared (infrared), laser (laser), cable connection (cable connection), and so on.

FIG. 2a shows a schematic architectural diagram of an implementation of a system supporting an application client being always online, the system includes:
an always online engine AOE (101), located in a terminal (10), and in communication connection with at least two application clients;
an always online service gateway AOG (20), located at a network side, and in communication connection with one or more application servers (04, 05) at the network side;
where the always online engine AOE (101) and the always online service gateway AOG (20) are configured to establish a long link, and the at least two application clients each communicate with the one or more application servers (04, 05) through the long link;
a user management server (30), located at the network side, in communication connection with the always online engine AOE (101) and the always online service gateway AOG (20), and configured to provide routing information for the AOE (101), where the AOE (101) requests establishment of the long link according to the routing information; and further configured to provide authentication information for the AOG (20) in the process of establishing the long link.

The one or more application servers mentioned in the foregoing may include, but not limited to, a server providing one of or any combination of the following applications: PUSH Mail, weather forecast, VOIP, advertisement, location service, enterprise office, life service, and so on.

The long link mentioned in the foregoing may be a long link conforming to a transmission control protocol (TCP, Transmission Control Protocol), and may also be a long link confirming to a user datagram protocol (UDP, UserDatagramProtocol).

The user management server (30), used as a management node of user data of an always online service, provides the routing information for the AOE (101), so that the AOE (101) requests establishment of the long link according to the routing information; and, in the process that the AOE (101) and the AOG (20) establish the long link, provide the authentication information for the AOG (20). The solution enables the always online engine AOE (101) and the always online service gateway AOG (20) to establish the long link simply and safely. It should be noted that, the internal of the user management server (30) may be in a cluster mode, or a distributed mode; may be integrated with any possible device at the network side, or disposed independently. However, for the AOG, the user management server is able to be distinguished from other devices, and multiple AOGs may exist in the system.

In an exemplary implementation, the authentication information is user identity information, for example, a cell phone number, user identification, or a user name, for the convenience of various application servers to perform authentication on a user of the application servers, and in a specific implementation, the AOG (20) may be an agent to perform an authentication process. However, generally, in the communication process, the terminal (01) carries terminal identity information, for example, IMSI information or device identification, and the information, if serving as the authentication information, needs to perform complicated authentification interaction with devices such as one or more application servers. In addition, it should be noted that, the routing information is an address of the home AOG (20) of the user identity information, and in a specific implementation, for the whole network, multiple AOGs (20) may exist, and the AOG providing an agent service for certain user identity information needs to be clarified.

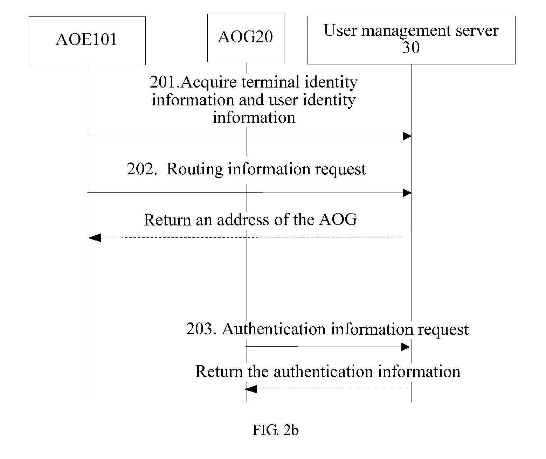

Referring to FIG. 2b, a flow chart of an exemplary implementation is shown, and the system in the FIG. 2 executes the following method.

201: The user management server (30) (for example, a registration management module (3011)) acquires and stores correspondence between terminal identity information and user identity information, and stores an address of a home AOG (20) of the user identity information.

202: When the AOE (101) (for example, a link management module (1011)) sends a routing information request, the user management server (30) (for example, a routing information module (3012)) provides the AOE (101) with the address of the home AOG of the user identity information according to the terminal identity information in the routing information request and the correspondence between the terminal identity information and the user identity information.

203: When the AOG (20) sends an authentication information request, the user management server (30) (for example, an authentication information module (3013)) provides the user identity information for the AOG (20) according to the terminal identity information in the authentication information request and the correspondence between the terminal identity information and the user identity information.

Specifically, the process of acquiring and storing the correspondence between the terminal identity information and the user identity information may be implemented, before the long link is established, through another possible communication channel, for example, a circuit domain communication channel, or a short message channel. Specifically, the process includes, but not limited to, reporting, by the terminal (10), to the user management server (30), or forwarding, by another network device, to the user management server (30), and may also be obtaining, by the user management server (30), through requesting the terminal (10) or another network device, the correspondence between the terminal identity information and the user identity information.

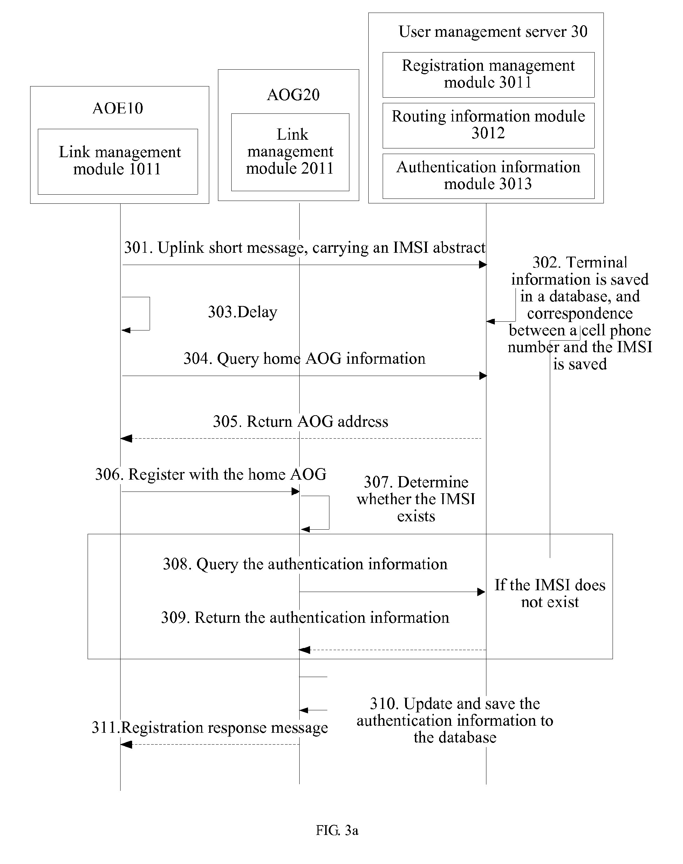

Referring to FIG. 3a, preferably, a communication system provided by a provider is taken as an example, and specifically, the terminal identity information being IMSI information and the user identity information being the cell phone number are taken as examples. The process that the user management server (30) at the network side, in the process of establishing the long link, provides the routing information for the AOE (101) and provides the authentication information for the AOG (20), specifically includes:
301: The AOE (101) (for example, the link management module (1011) on the AOE (101)) automatically sends a reporting message to the user management server (30) when the always online engine AOE (101) is started or it is detected that ISMI information in an SIM card is different from information registered last time, where the reporting message carries the IMSI information and the cell phone number.

The reporting message is information that can be sent without the establishment of a link between the AOE (101) and the AOG (20), for example, information in the circuit domain, or information of a non-data link. More specifically, the reporting message may be a short message, or an online Radius notification forwarded by an AAA server, and so on. If the reporting message is a short message, it is only needed to carry the IMSI information in content of the short message, and the system sets a sender of the short message to a cell phone number by default, thereby further saving data communication resources.

302: The user management server (30) (for example, the registration management module (3011)) acquires the IMSI information and the cell phone number according to the received reporting message, and stores correspondence between the cell phone number and the IMSI information.

303: Optionally, the reporting message may have some delay, and in order to ensure that the user management server (30) performs subsequent processing flow after receiving the reporting message, the AOE (101) may delay for a certain period of time.

304: The AOE (101) (for example, the link management module (1011)) sends a routing information request to the user management server (30), where the routing information request carries the IMSI information.

305: The user management server (30) (for example, the routing information module (3012)) finds a corresponding cell phone number according to the IMSI information in the received routing information request (specifically, searching the registration management module (3011)), and return an address of the home AOG (20) of the cell phone number to the AOE (101) according to the pre-stored address of the home AOG of the cell phone number.

306: The AOE (101) (for example, the link management module (1011)) initiates a registration request to the home AOG (20) after acquiring the information of the home AOG, where the registration request carries the IMSI information.

Preferably, the registration request may also carry, but not limited to: information of a registered application client in the AOE (101), such as, identification of the application, a type of the terminal, an access network APN, a version of an operating system, and a version of the AOE (101).

307: After receiving the registration request of the AOE (101), the AOG (20) determines whether IMSI information included in the registration request has been registered in the AOG (20).

308. If not registered, the AOG (20) sends an authentication information request to the user management server (30), where the authentication information request carries the IMSI information in the registration request.

309: After receiving the authentication information request, the user management server (30) (specifically, for example, a terminal information module 301) returns, to the AOG (20), a terminal information (including the cell phone number) corresponding to the IMSI information.

310: The AOG (20) (for example, a link management module (2011) in the AOG (20)) determines whether the cell phone number is in a service range of the AOG (20), if no, returns registration failure, and ends the flow. If the cell phone number is in the service range of the AOG (20), the AOG (20) (for example, the link management module (2011) in the AOG (20)) stores the cell phone number. Preferably, other information carried in the registration information may be saved, for example, information such as a terminal type and a registered application client.

311: After successfully registering in step 310, the AOG (20) (for example, the link management module (2011) in the AOG (20)) returns a registration response to the AOE (101) (for example, the link management module (1011)).

At this point, the AOE (101) and the home AOG (20) thereof successfully establish the long link. The process utilizes trustable terminal information in the system and the user information to establish the long link, without the need that the system generates a unique device ID for each terminal (10) through complicated interaction and establishes the long link by using the unique device ID, thereby improving the safety of the long link while simplifying the flow.

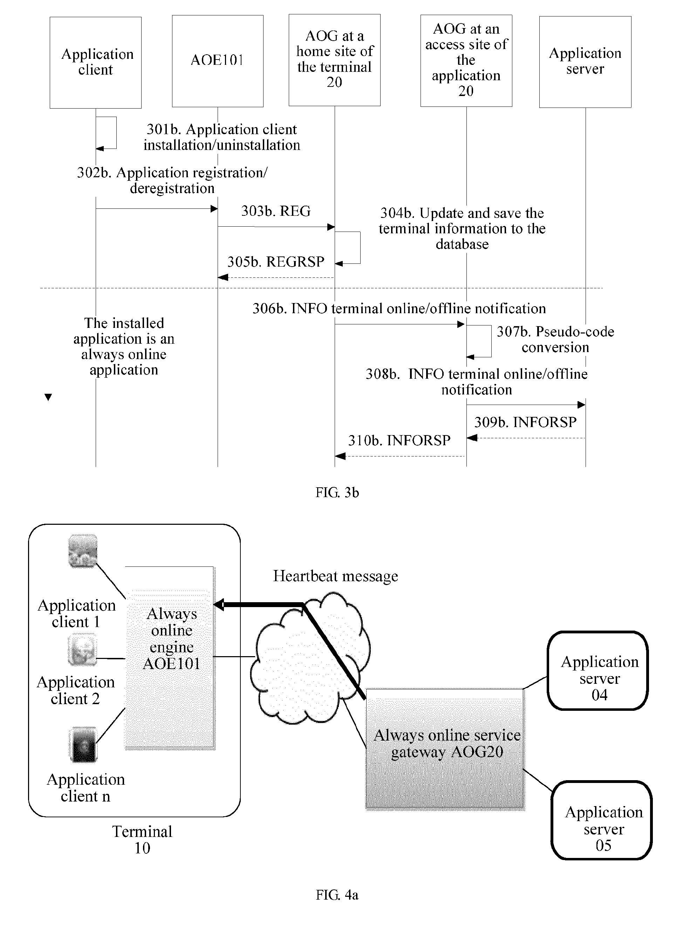

FIG. 3a shows a process of establishing a link when the terminal (10) is started or it is detected that the ISMI information in the SIM is different from the information registered last time (that is, the SIM card in the terminal is changed, and it may be understood as a new terminal (10)), specifically, including registration of terminal information in the AOG (20) and registration of application information in the AOG (20). In other situations, it may occur that after the terminal (10) itself is registered with the AOG (20), some applications are added or deleted, so the update of application information is needed through a similar method. Referring to FIG. 3b, a schematic flow chart of updating an application is shown, where the AOG (20) is a system formed by an AOG at a home site of the terminal (10) and an AOG at an access site of the application server. In a specific example, the flow includes:
301b: Installed (or uninstalled), on the terminal, an application client supporting implementation of an AOI function interactively with the AOE (101);
302b: After completing the installation (or completing the uninstallation) of the application client, invoke an application register interface of an SDK to perform registration (the uninstallation is considered as invoking an application deregister interface of the SDK to perform deregistration);
303b: The AOE (101) invokes an REG interface, and sends an application add request (an application delete request during the uninstallation) to the AOG at the home site of the terminal;
304b: The AOG at the home site of the terminal updates the application information corresponding to the terminal and saves the application information in a database;
305b: The AOG at the home site of the terminal returns a registration response (a deregistration response during uninstallation) to the AOE (101);
306b: The AOG at the home site of the terminal, according to an ID of the application reported by the terminal, constructs an INFO online notification message (being an offline notification message during uninstallation), sends it to a home AOG gateway of the application, where the online notification message carries a cell phone number;
307b: The AOG at the access site of the application server converts the cell phone number into a pseudo-code;
308b: The AOG at the access site of the application server forwards the online notification message (being the offline notification message during uninstallation) to the application server, where the message carries the pseudo-code;
309b: The application server returns a notification response; and
310b: The AOG at the access site of the application server forwards the notification response to an AOG gateway of an original notification initiator.

Specifically, when the home AOG gateway of the terminal and the home AOG gateway of the application are the same gateway, the process of forwarding a message between gateways in the steps 306b and 310b of the flow as described in the foregoing is not needed.

If the home AOG gateway of the terminal and the home AOG gateway of the application are not the same gateway, and no effective link is established between the two, before forwarding the message, the AOG gateway at the home site of the terminal actively completes an REG registration process to the AOG gateway at the home site of the application, and then performs message forwarding.

In order to simplify the flow of processing the REG message in the internal of the AOG gateway, in an installation flow of the application, the AOG 02 may not distinguish the type of the registration message (or deregistration message), and after receiving a message, the AOG 02 may still determine, according to a first registration flow, whether an IMSI abstract exists in the present AOG, if not exist, queries the user management server 03 for a cell phone number, and according to whether the cell phone number is in a service range of the present AOG, determines content of a message returned to the AOE (101). In a pure installation flow of the application, the IMSI definitely exists, and the number definitely belongs to the present AOG, so no other branch is achieved.

FIG. 4a shows a schematic architectural diagram of an implementation of a system supporting an application client being always online, and the system includes:
at least two application clients, where the application clients are located in a terminal (10), and in communication connection with an always online engine AOE (101);
the always online engine AOE (101), located in the terminal (10) and in communication connection with the at least two application clients, and configured to establish a long link with an always online service gateway AOG (20);
the always online service gateway AOG (20), located at a network side, and configured to establish the long link with the always online engine AOE (101);
one or more application servers (04, 05), located at the network side, and in communication connection with the always online service gateway AOG (20);
where, the at least two application clients communicate with the one or more application servers 04 through the long link, so that the at least two application clients each implement application services provided by the one or more servers (04, 05); in the system, the AOG (20) at a server side is responsible for maintenance of the long link, that is, the AOG (20) initiates a heartbeat message between the terminal (10) and the AOG (20) so as to maintain the long link. The application client is configured to provide application services for users, and the application server 04 is configured to provide various application services, for example, one of or any combination of the following applications: PUSH Mail, weather forecast, VOIP, advertisement, location service, enterprise office, life service, and so on.

Referring to FIG. 4a, compared with the manner that the terminal side initiates the heartbeat, the manner of maintaining the long link does not need the terminal (including the application clients in the terminal) to send a large number of heartbeat messages to the one or more application servers, thus reducing signaling burden at the terminal side, and further does not need the AOE (101) in the terminal to perform special processing such as filtering/discarding on the heartbeat messages, thus further reducing signaling consumption inside the terminal (10) while reducing signaling consumption sent to the outside by the terminal. In addition, when initiating the heartbeat, the AOG (20) may adjust a heartbeat interval according to a network status, automatically control a heartbeat parameter, so that the heartbeat best suits the network status, thereby avoiding the process of the terminal side actively detecting a network parameter, and further reducing the waste of communication resources.

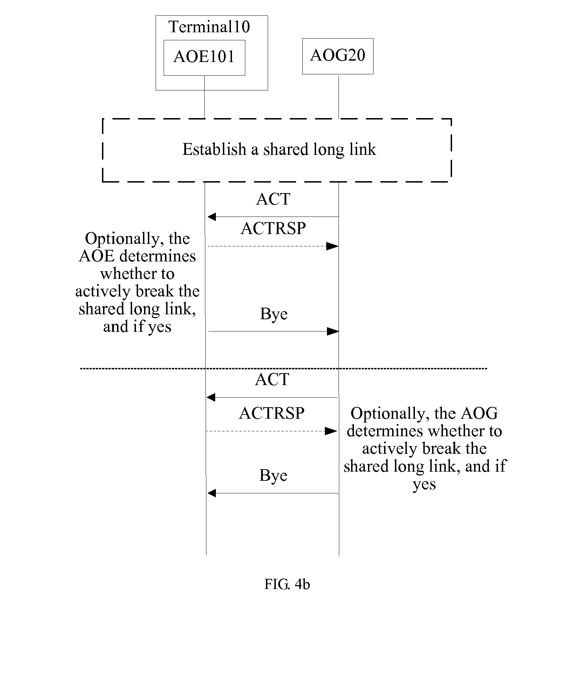

Referring to FIG. 4b, in an exemplary implementation, each of the AOE (101) and the AOG (20) may actively break the long link according to its own judgement, thereby further saving the communication resources such as the network, terminal, and server, and definitely saving power consumption of each device, especially the terminal (10). When necessary, the AOG (20) may actively wake up the connection with the terminal side.

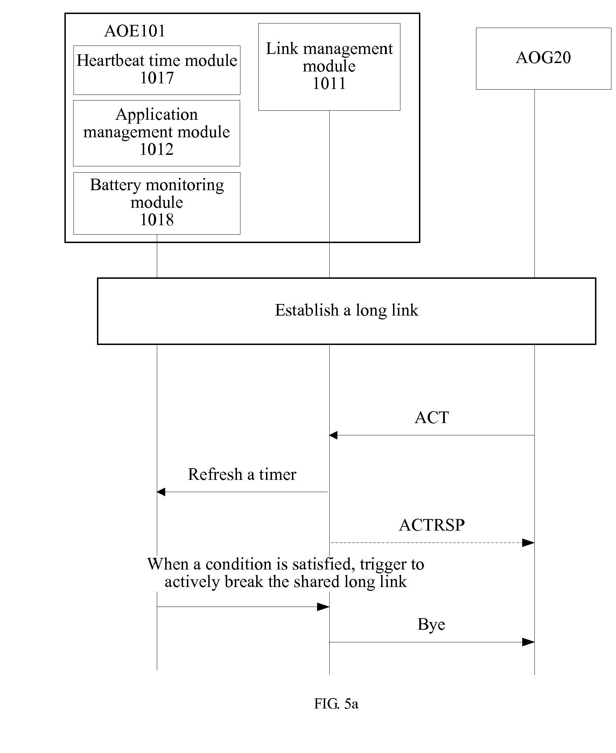

FIG. 5a is a schematic diagram of an implementation of heartbeat maintenance of the long link from the perspective of the AOE (101). Referring to FIG. 5a, after establishing the long link, the schematic diagram of an exemplary method of the AOE (101) performing maintenance on the long link includes the follows:

Optionally, the AOE (101) (for example, the link management module (1011) in the AOE (101)) receives a break request (for example, BYE) actively sent by the AOG (20), and then breaks the long link.

Optionally, after receiving the heartbeat message, the AOE (101) (for example, a heartbeat time module (1012)) refreshes a timer, and if no other heartbeat message is received when the timer exceeds a certain time threshold, sends a break request (for example, BYE) to the AOG (20) to close the long link. For example, the time threshold is set as 5 minutes, 10 minutes, or 30 minutes, and so on.

Optionally, when the AOE (101) (for example, an application management module (1012) in the AOE (101)) detects that all application clients managed by the AOE (101) do not run in a certain time threshold, the AOE (101) actively initiates a break request (for example, a BYE request) to break the long link. For example, the time threshold is set as 5 minutes, 10 minutes, or 30 minutes, and so on.

Optionally, the AOE (101) (for example, a battery monitoring module (1014) in the AOE (101)) monitors a battery level of the terminal (10), and when the battery level is less than a certain threshold (for example, the battery level is only 10%, or 5%), if the long link exists, the AOE (101) actively sends a break request (for example, BYE). Optionally, a label may be added in the break request, so as to indicate that the long link is broken due to a low battery level.

Through the possible implementations described in the foregoing, after the long link is broken, the AOE (101) enters a dormant state (may wait to be woken up by the AOG (20) through a short message), thus saving the power of the terminal (10). Various manners of breaking the long link actively initiated by the AOE (101) further reduce unnecessary signaling waste, for example, the AOG (20) at the network side after the breaking does not need to send a heartbeat message, thereby further saving the battery power of the terminal (10).

In addition, it should be noted that, when the long link between the AOE (101) and the AOG (20) exists, it is needed to avoid the operating system of the terminal (10) from entering the dormant state, so as to ensure the normal connection of the long link, and when the long link with the AOG is broken, the dormant mechanism of the operating system may be restored.

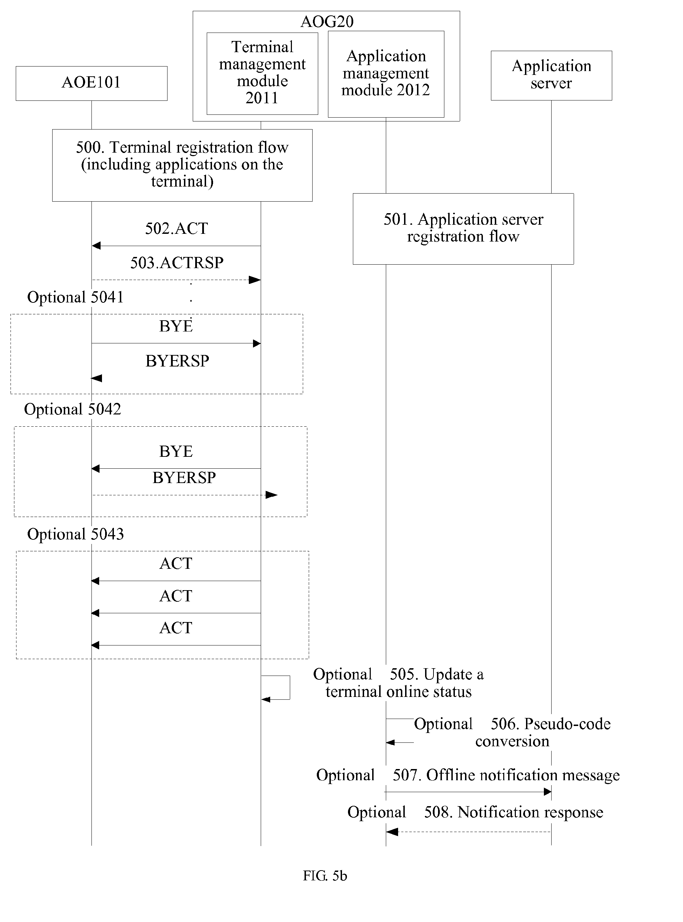

Referring to FIG. 5b, how to maintain the long link is illustrated from the perspective of the AOG (20). It should be noted that, the AOG (20) described in FIG. 5b, in an actual application process, may be a single server, and may be divided into a home AOG (20) of the terminal (10) (specifically, the AOE (101) in the the terminal (10)) and a home AOG (20) of one or more application servers. Optionally, for the latter (the situation of two AOGs), the home AOG (20) of the terminal (10) and the home AOG (20) of the one or more application servers perform communication connection, the home AOG (20) of the terminal (10) is responsible for performing interaction with the AOE (101) in the terminal (10), and the home AOG (20) of the one or more application servers is responsible for performing interaction with the one or more application servers. More specifically, in term of the internal structure of the AOG (20), steps 501 to 504 shown in FIG. 5b may be executed by the terminal management module (1021), where the terminal management module (1021) may be located at the home AOG (20) of the terminal (10); and step 500 and steps 505-508 may be executed by the application management module (1022), where the application management module (1022) may be located at the home AOG (20) of the application server.

Specifically, the implementation shown in FIG. 5b includes the following steps:
500-501: The AOE (101) and the AOG (20) successfully establish the long link. Specifically, the AOE (101) and the home AOG of the terminal complete the REG registration flow (501), including information of the terminal and information of application clients on the terminal. Correspondingly, the one or more application servers also need to be successfully registered with the AOG (20) (step 500), and in this way, the AOE (101) (that is, the terminal (10)) online/offline notification can be notified subsequently to the one or more application servers.
502: After the AOE (101) and the AOG (20) successfully establish the long link, the AOG (20) actively initiates an ACK heartbeat message to the terminal, so as to maintain the long link. In an exemplary implementation, according to the network status, a time interval of sending the heartbeat message may be configured, a timeout time control may be configured, and so on.
503: The AOE (101) replies an ACKRSP response, indicating an active state of the AOE (101).
504: The AOG (20) performs the maintenance on the long link according to the following situations, including, but not limited to:
5041: When the AOG (20) receives the break request actively sent by the AOE (101), the AOG (20) breaks the long link and no longer sends the heartbeat message; specifically, the flow shown in FIG. 5a may be referred to.
5042: When the AOG (20) determines that a data stream sent from the terminal (10) (AOE (101)) has not been received after a certain time threshold expires, the AOG (20) actively initiates a break request (for example, BYE), and no longer sends the heartbeat message. In an exemplary implementation, the time threshold may be configured to, for example, 5 minutes, 10 minutes or 30 minutes by default.
5043: When the AOG (20) determines that the number of situation of not obtaining the response of the AOE (101) after sending the heartbeat message ACT exceeds a certain threshold of times, the AOG (20) actively initiates a break request (for example, BYE), and no longer sends the heartbeat message. In an exemplary implementation, the threshold of number of times may be configured to, for example, 3 times, 4 times, or 5 times by default, and so on.
5054: After 502, if no break request sent by the AOE (101) is received and no break request is actively sent to the AOE (101) either, according to the heartbeat time interval, the AOG (20) sends the heartbeat message to the AOE (101) regularly, so as to maintain the long link, which is not shown in the drawing.

In an exemplary implementation, on the basis of the maintenance on the long link, the AOG (20) (for example, the application management module (2012)) may further manage the online status of the AOE (101), and the application clients on the AOE (101). For example, optionally, in step 505, if the AOG (20) breaks the long link according to the situation such as step 5041, 5042, or 5043, it is confirmed that the AOE (101) is offline, and the locally stored online status of the AOE (101) is updated to: offline.

Optionally, in step 506, the AOG (20) queries information of an always online application client registered in the AOE (101), if interaction with one or more application servers needs to be performed by using a pseudo-code, the AOG (20) (for example, the application management module (2012)) converts the cell phone number of the AOE (101) stored on the AOG (20) into a pseudo-code, where the pseudo-code is transferred, as user identity information, between the AOG (20) and the application server. Here, the pseudo-code is a unique identity of a user in the system and directing to a certain application.

Specifically, in order to protect user privacy, some applications cannot reveal the cell phone number to the application server (SP), and at this time, other identification needs to replace the cell phone number. In a general method, an abstract may be made according to information such as the cell phone number and other random numbers, and a calculated abstract may be referred to as a pseudo-code. The cell phone number is one-to-one corresponding to the pseudo-code, and a mapping relationship may be saved at the server side. However, the algorithm is unidirectional, that is, related random parameters are not to be sent to the application server (SP), and therefore, the application server (SP) cannot deduce the cell phone number through the pseudo-code. The one or more application servers (SP) may identify the user by using the pseudo-code when sending a downlink message, and at the server side, if a corresponding cell phone number can be queried by using the pseudo-code, the message can be routed to a correct user.

More specifically, the pseudo-code is of an application level, some applications can be designated to enable a pseudo-code function, and some applications can be designated to disable the pseudo-code function. If the application management module (2012) designates that transferring the pseudo-code is needed in a control attribute of the application, it is needed to generate a pseudo-code for a cell phone number that has interaction with the application, and to maintain the correspondence between the user cell phone number and the pseudo-code. In an example, the method of generating the pseudo-code is: pseudo-code = HASH (MSISDN, Time, APPID, Random), where HASH indicates a hash algorithm, for example, adopting an MD5 algorithm; MSISDN indicates a user cell phone number; Time indicates a time stamp, for example, adopting a YYYYMMDDHH24MISS format; APPID indicates an application identification; and Random indicates a random number. For a designated cell phone number and a certain application, the pseudo-code is generated once in the system, and is always valid. Specifically, when it is needed to convert the cell phone number into the pseudo-code, the system first performs join query on a local database according to the cell phone number and the application ID, and if the pseudo-code cannot be found, it proves that the application is used for the first time, and the pseudo-code is generated by using the foregoing algorithm. When it is needed to convert the pseudo-code into the cell phone number, the AOG (20) queries the local database, and if the query fails, it proves that the pseudo-code designated by the application is wrong. If the query succeeds, an APPID in the application message is matched with an APPID in a local pseudo-code database, and if the matching succeeds, it is considered that pseudo-code verification is successful.

Optionally, in step 507, the AOG (20) constructs an offline notification message and sends it to the one or more application servers, where the offline notification message includes the pseudo-code.

Correspondingly, in step 508, after receiving the offline notification message, the one or more application servers may return a notification response.

Specifically, if the AOG (20) is a server, the AOG (20) executes the steps 506 and 507; if the AOG (20) is a system formed by the home AOG (20) of the AOE (101) and the home AOG (20) of the one or more application servers, the home AOG (20) of the AOE (101) sends the offline notification message including the cell phone number to the home AOG (20) of the one or more application servers, the home AOG (20) of the one or more application servers converts the cell phone number into the pseudo-code, and sends the offline notification message including the pseudo-code to the one or more application servers.

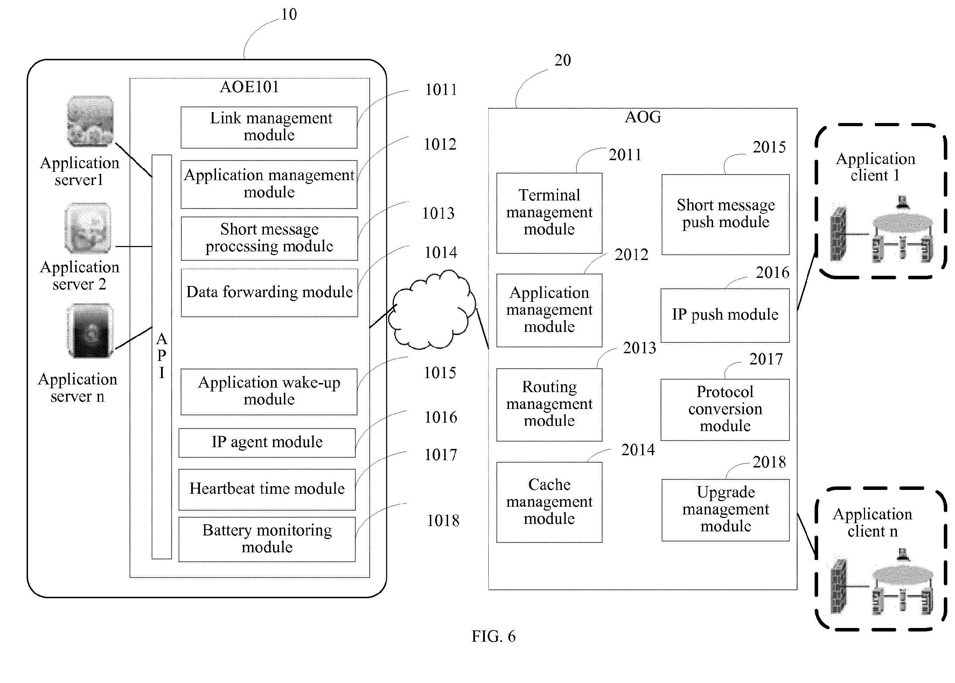

Based on various possible implementations described in the foregoing, after the long link is broken, the AOE (101) may wait to be woken up by the AOG (20) through a short message, so as to reestablish the long link. Specifically, it may be implemented by the system shown in FIG. 6, for example, implemented by a "short message push module (2015)" in the AOG (20), and a "short message processing module (1013)" and an "application wake-up module (1015)" in the AOE (101).

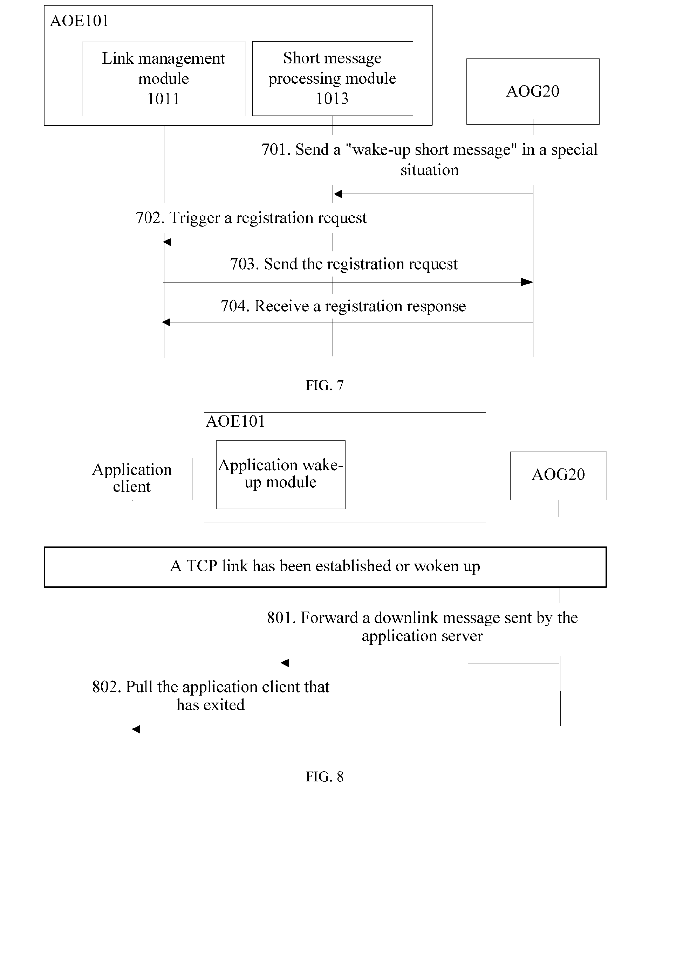

Specifically, referring to FIG. 7a, a schematic flow chart of a possible implementation of waking up a long link when the long link is broken is shown, which includes:
701: The short message push module (2015) in the AOG (20) sends a "wake-up short message" to the AOE (101) in a special situation, so as to wake up the long link that has not been established or has been broken.

Specifically, the wake-up short message is not a common text short message, but a binary short message of a special format, which is negotiated between the AOG (20) and the AOE (101), so that the wake-up short message can be understood by the two, but is invisible for other network devices. The binary short message used to wake up the long link may include content such as an ID of the application that needs to be woken up, identification of a sender of a downlink message, target user identification, and an abstract of the message.

702: After monitoring and intercepting the "wake-up short message", the short message processing module (1013) in the AOE (101) parses the "wake-up short message" to trigger the link management module (1011) in the AOE (101) to establish the long link. Specifically, the monitoring refers to detecting the existence of the wake-up short message, and the intercepting refers to that the wake-up short message is no longer transferred downwards, and other applications will not receive the content of the wake-up short message.

703-704: The link management module (1011) in the AOE (101) initiates a registration request to the AOG (20) according to a prompt of the short message processing module (1013), receives a registration response returned by the AOG (20), and correspondingly establishes the long link. The AOG (20) sends the downlink message sent by the application server to the AOE (101) through the reestablished long link.

In another exemplary implementation, referring to FIG. 8, a schematic flow chart of an implementation of a method of waking up an application client is shown. When the long link is established or is woken up, and the application client in the terminal (10) that has exited but still receives the data forwarded by the AOG (20) and sent to the application client (801), the application wake-up module (1015) in the AOE (101) may also pull the exited application client (802).

Specifically, the application client and the AOE (101) are two independent processes on the terminal (10), when being enabled, the application needs to be registered with the AOE (101), and informs the AOE (101) of information such as an installation position of a program and a running parameter, so that the AOE (101) can monitor the running state of the application client on the terminal. When the application client exits (it may exit actively according to an instruction of the user), and a downlink message needs to be notified to the application client, the AOE (101) reruns the program of the client according to the foregoing registration information, so as to pull the application client, and then notifies the application client of a received downlink message through an internal API interface or a message interface.

In other implementations, different further implementations that may be combined randomly with each implementation described in the foregoing may be provided. Referring to FIG. 6, optionally, the AOE (101), the AOG (20), and the user management server (30) include various possible modules, and each module, except having logical exclusion, may be combined randomly, so as to form more exemplary implementations. Each device and each module in the devices are introduced one by one as follows.

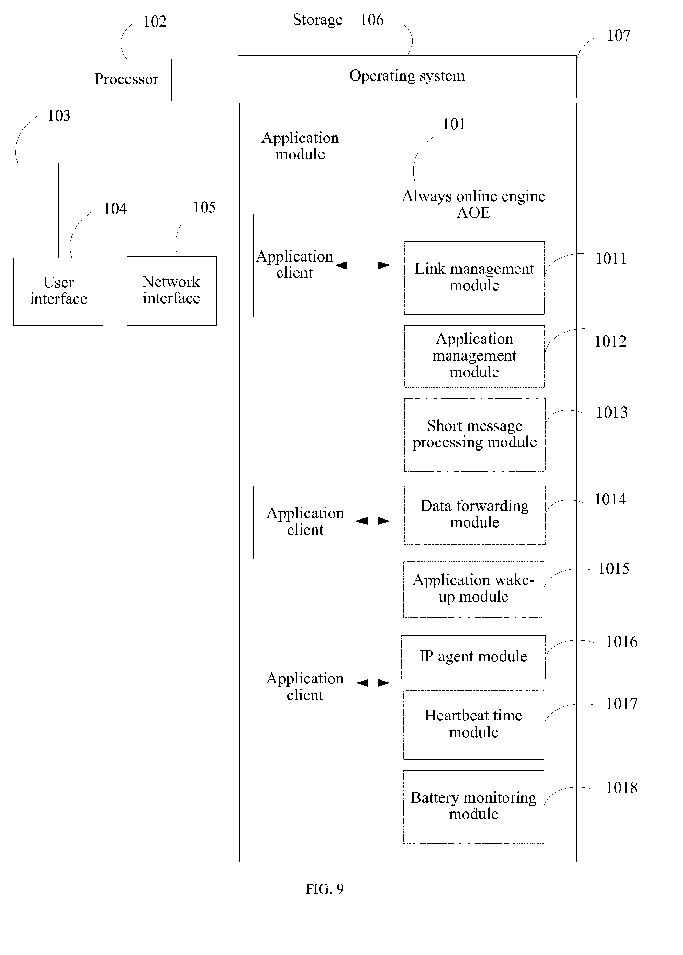

FIG. 9 is a schematic structural diagram of an implementation of a terminal (10) in the system. The terminal (10) generally includes at least one processor (102) (for example, CPU), at least one network interface (105) or other communication interfaces, a storage (106), and at least one communication bus (103) configured to implement the connection and communication among the devices. The processor (102) is configured to execute an executable module stored in the storage, for example, a computer program. The terminal (10) optionally includes a user interface (104), including, but not limited to, a display, a keyboard, and a clicking device (for example, a mouse, and a trackball (trackball), a touchpad or a touchscreen. The storage (106) may include a high-speed Ram storage, and may also include an unstable storage (non-volatile memory), for example, at least one disk storage. The communication connection between the terminal (10) and at least one other computer is implemented through at least one network interface (may be wired or wireless), and the Internet, the wide area network, the local area network, the metropolitan area network, and so on, may be used.

The storage (106) optionally includes at least one storage device (for example, an external storage device) far away from a position of the foregoing CPU 801. In some implementations, the storage (106) stores the following elements: executable modules or data structures, or subsets thereof, or expansion sets thereof:
an operating system (107), including various programs, configured to implement various basic services and process hardware-based tasks.
at least two application clients (108), in communication connection with an always online engine AOE (101), and configured to separately provide application services for the user; and
the always online engine AOE (101), in communication connection with the at least two application clients (108) in the terminal (10), in communication connection with the always online service gateway AOG (20) at the network side, and in communication connection with the one or more one or more application servers 04 at the network side through the always online service gateway AOG (20).

The always online engine AOE (101) includes, but not limited to, one or a combination of the following modules:
a link management module (1011), an application management module (1012), a short message processing module (1013), a data forwarding module (1014), an application wake-up module (1015), an IP agent module (1016), a heartbeat time module (1017), or, a battery monitoring module (1018), an API interface, and so on.

In a specific implementation, the link management module (1011) may be configured to establish a long link between the AOE (101) and the always online service gateway AOG (20), where the at least two application clients each communicate with one or more application servers (04, 05) through the long link; acquire routing information from the user management server (30), and request establishment of the long link according to the routing information. Specifically, the process of acquiring the routing information includes: sending the routing information request including the terminal identity information to the user management server (30), and receiving the address of the AOG according to correspondence between terminal identity information and user identity information, in which the correspondence is stored in the user management server (30), and an address of a home AOG of the user identity information. In an example, the terminal identity information is IMSI information, and the user identity information is a cell phone number; and in another example, the terminal identity information is terminal device identification, and the user identity information is a user name or user identification. Specifically, for the foregoing process, reference may be made to the implementations shown in FIG. 2b, FIG. 3a, and FIG. 3b.

Optionally, the always online engine AOE (101) provides an API interface, and the application client may communicate with it through the API interface, in this way, each application client does not directly establish the long link with an application provider, but establishes the long link through the always online engine AOE (101).

Optionally, the AOE (101) includes an application management module (2013), and a function of managing the application client registered in the always online engine AOE (101) includes, but not limited to, registration of a program, deregistration, and reporting of program running and exiting the running state.

Optionally, the always online engine AOE (101), for example, further includes the data forwarding module (1014), which is configured to receive data from different application clients, and send the data through the foregoing "long link"; and meanwhile acquire data from the "long link", determine, according to an application ID in the data, a home application client that the message belongs to, and then forward the message to the application client. Specifically, an uplink message sent by the application client is forwarded to the always online service gateway 102, so as to be further forwarded to one or more application servers; and a downlink message sent by the one or more application servers and forwarded by the always online service gateway AOG (20) is received, and then forwarded to the application client.

In another exemplary implementation, when the application client has a large amount of data that need to interact with one or more application servers, the AOE (101), for example, the IP agent module (1016), may provide a separate connection to interact with the one or more application servers. Preferably, when transferred data reaches a threshold, an IP agent channel needs to be established, and the IP agent channel transfer the data exclusively. Preferably, the IP agent channel may be closed actively when the data transfer ends. Preferably, for the application client or one or more application servers that do not actively close the IP agent channel, the AOE (101) may set a timeout mechanism, and after the time without data interaction reaches a threshold (for example, 60s), the AOE (101) actively breaks the connection.

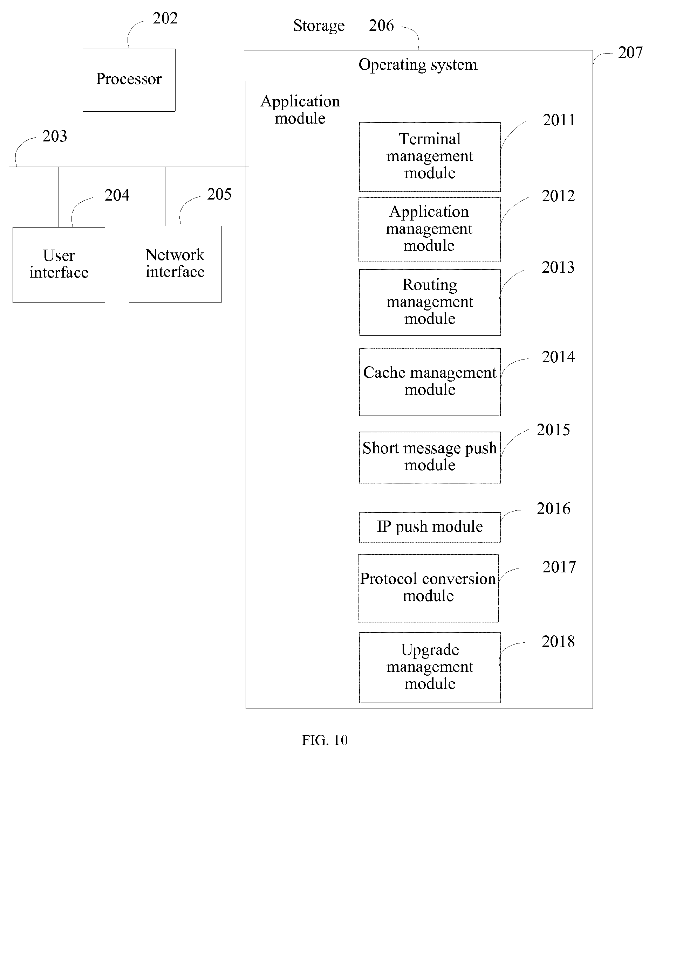

FIG. 10 is a schematic structural diagram of an implementation of an always online gateway AOG (20) in the system. It should be noted that, as described in the foregoing, the AOG (20) may be set as two devices separated on different physical positions as desired, that is, the home AOG (20) of the terminal (10) and the home AOG (20) of the application server, which communication with each other to complete related functions together, and have similar structures. However, application modules may include different modules according to different positions of the application modules.

The AOG (20) is located at the network side, is in communication connection with the always online engine AOE (101) in the terminal (10), where the always online engine AOE (101) is in communication connection with the at least two application clients in the terminal (10); and is in communication connection with the one or more one or more application servers (04, 05) at the network side.

The AOG (20) generally includes at least one processor (202) (for example, CPU), at least one network interface or other communication interface (205), a storage (206), and at least one communication bus (203) configured to implement the connection and communication among the devices. The processor (202) is configured to execute an executable module stored in the storage, for example, a computer program. The AOG (20) optionally includes a user interface (204), including, but not limited to, a display, a keyboard, and a clicking device (for example, a mouse, and a trackball (trackball), a touchpad or a touchscreen. The storage (206) may include a high-speed Ram storage, and may also include an unstable storage (non-volatile memory), for example, at least one disk storage. The communication connection between the AOG (20) and at least one other computer is implemented through at least one network interface (may be wired or wireless), and the Internet, the wide area network, the local area network, the metropolitan area network, and so on, may be used.

The storage (206) optionally includes at least one storage device (for example, an external storage device) far away from a position of the foregoing CPU. In some implementations, the storage (206) stores the following elements: executable modules or data structures, or subsets thereof, or expansion sets thereof:
an operating system (207), including various programs, configured to implement various basic services and process hardware-based tasks; and one or any combination of the following modules:
   a terminal management module (2011), an application management module (2012), a routing management module (2013), a cache management module (2014), a short message push module (2015), an IP push module (2016), a protocol conversion module (2017), or, an upgrade management module (2018).

In the specific implementation, the terminal management module (2011) is configured to establish a long link between the always online engine AOE (101) and the AOG (20), where at least two application clients each communicate with the one or more application servers (04, 05) through the long link; and acquire authentication information from the user management server (103) in the process of establishing the long link. Specifically, the terminal management module (2011) is configured to send, to the user management server (30), an authentication information request carrying the terminal identity information, receive user identity information, which is returned by the user management server (30), according to correspondence between the terminal identity information and the user identity information. In an example, the terminal identity information is IMSI information, and the user identity information is a cell phone number; in another example, the terminal identity information is terminal device identification, and the user identity information is a user name or user identification.

Referring to FIG. 6 at the same time, in an exemplary implementation, optionally, the terminal management module (2011) in the always online service gateway AOG (20) may also be configured to implement the management on the terminal (10), for example, management of information of the AOE (101) registered with the system, such as an IMSI abstract, and user agent (UserAgent, UA) information of the AOE (101), and further including information of an application registered in the AOE (101), for example, identification or version of the application installed on the AOE (101) currently. Optionally, the terminal management module (2011) may further perform authentication on the identity of the AOE (101), register the registration information, and store in the system. For the specific process, reference may be made to the implementations shown in FIG. 2b, FIG. 3a, FIG. 3b and so on. Preferably, the terminal management module (2011) may also manage the long link between the AOE (101) and the AOG, for example, sending a heartbeat message, and maintaining long link state information, such as an established state and a broken state.

Optionally, the application management module (2012) in the always online service gateway AOG (20) may perform management on the application, for example, managing information of all applications that access the present AOG (20), including the home application server (or application provider SP) of the application and information thereof, and providing functions such as access authentication and use right control for the one or more application servers that access. In an exemplary implementation, managements such as the management on the pseudo-code are performed according to specific applications. For the specific process, reference may be made to the implementation shown in FIG. 5b.

Optionally, the routing management module (2013) in the always online service gateway AOG (20) may implement the routing management, that is, the AOG can correctly route the uplink/downlink message to a corresponding network element.

Optionally, the cache management module (2014) in the always online service gateway AOG (20) may implement the cache management, and specifically, according to application requirements, as for the data message delivered by the application to the AOE (101), when the delivery is unsuccessful, the message is cached. Specifically, the cached message performs retry, and after the retry succeeds, a successful status report is returned to the application.

Optionally, the short message push module (2015) in the AOG (20) may send a "wake-up short message" to the AOE (101) in a special situation, so as to wake up the long link that has not been established or has been broken; and send the downlink message sent by the application server to the AOE (101) through the foregoing reestablished long link. For the specific process, reference may be made to the implementation shown in FIG. 7.

Optionally, the IP push module (2016) in the AOG (20) may implement an IP data push function (IP PUSH), and specifically, in the situation that the long link has been broken, compared with the technical solution of waking up the long link through a short message, another solution may also be adopted: that is, for the downlink message that needs to be sent by the application server, an IP data channel is established directly, and the message is delivered to the always online engine AOE (101) through the IP data channel, and then sent to the application client through the AOE (101). Preferably, when the downlink message that needs to be sent by the application server has large data volume (for example, greater than a set threshold), the IP data channel is directly established to perform push of the downlink data; and when the downlink message that needs to be sent by the application server has small data volume (for example, less than or equal to the set threshold), after the long link is woken up through the short message, the downlink data is pushed through the long link.

Optionally, when an internal protocol is adopted between the always online service gateway AOG (20) and the always online engine AOE (101), and a public protocol is adopted between the AOG (20) and one or more application servers, the protocol conversion module (017) in the always online service gateway AOG (20) may convert the message between the two protocols.

Optionally, the upgrade management module (2018) in the AOG (20) may manage all versions of the always online engine AOE (101), and may trigger automatic upgrading and update of the always online engine.

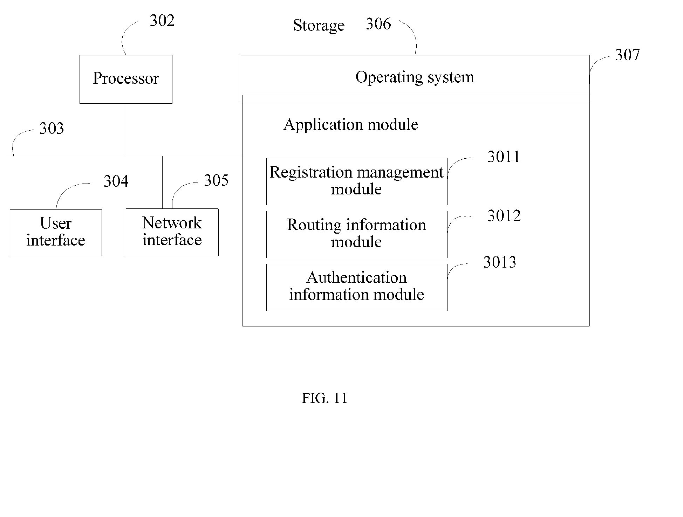

FIG. 11 is a schematic structural diagram of an implementation of a user management server (30) in the system. As described in the foregoing, the user management server (30), located at the network side, is in communication connection with the always online engine AOE (101) and the always online service gateway AOG (20), where at least two application clients each communicate with the one or more application servers (04, 05) through the long link. The user management server (30) generally includes at least one processor (302) (for example, CPU), at least one network interface or other communication interface (305), a storage (306), and at least one communication bus (303) configured to implement connection and communication among the devices. The processor (302) is configured to execute an executable module stored in the storage, for example, a computer program. The user management server (30) optionally includes a user interface (304), including, but not limited to, a display, a keyboard, and a clicking device (for example, a mouse, and a trackball (trackball), a touchpad or a touchscreen. The storage (306) may include a high-speed Ram storage, and may also include an unstable storage (non-volatile memory), for example, at least one disk storage. The communication connection between the user management server (30) and at least one other computer is implemented through at least one network interface (may be wired or wireless), and the Internet, the wide area network, the local area network, the metropolitan area network, and so on, may be used.

The storage (306) optionally includes at least one storage device (for example, an external storage device) far away from a position of the foregoing CPU. In some implementations, the storage (306) stores the following elements: executable modules or data structures, or subsets thereof, or expansion sets thereof:
an operating system (307), including various programs, configured to implement various basic services and process hardware-based tasks; and one or any combination of the following modules:
   a routing information module (3012) and an authentication information module (3013).

Specifically, the routing information module (3012) is configured to provide routing information for the AOE (101), so as to request establishment of the long link according to the routing information; and the authentication information module (3013) is configured to provide authentication information for the AOG (20) in the process that the AOE (101) and the AOG (20) establish the long link.

Preferably, a registration management module (3011) may be further included, which is configured to acquire and store correspondence between terminal identity information and user identity information, and store an address of a home AOG (20) of the user identity information. The routing information module (3012) is specifically configured to provide the AOE (101) with the address of the home AOG of the user identity information according to the terminal identity information in the routing information request sent by the AOE (101), and the correspondence between the terminal identity information and the user identity information, where the correspondence is acquired and stored by the registration management module. The authentication information module (3013) is specifically configured to: when the AOG (20) sends an authentication information request, provide the AOG (20) with the user identity information according to the terminal identity information in the authentication information request, and the correspondence between the terminal identity information and the user identity information, where the correspondence is acquired and stored by the registration management module. In an example, the terminal identity information is IMSI information, and the user identity information is a cell phone number; and in another example, the terminal identity information is terminal device identification, and the user identity information is a user name or user identification.

It should be noted that, in each of the above implementations, different modules are especially mentioned, and may be combined randomly as long as there is no illustration about that they cannot be implemented cooperatively, so as to implement more beneficial effects, without limitation in the form. The device embodiments are merely exemplary. Units described as separate components may be or may not be physically separated. Components shown as units may be or may not be physical units, that is, may be integrated in one place or distributed to a plurality of network units. Some or all of the modules may be selected to achieve the objective of the solution of the embodiment according to actual demands. Persons skilled in the art may understand and implement the present invention without creative efforts.

Through the above description of the implementation, it is clear to persons skilled in the art that the present invention may be accomplished through hardware, or through software plus a necessary universal hardware platform. Based on this, the technical solutions of the present invention or the part that has contributions to the prior art may be embodied in the form of a software product. The software product may be stored in readable storage media, such as CD-ROM, USB flash drive, or removable hard disk, and include several instructions adapted to instruct computer equipment (for example, a personal computer, a server, or network equipment) to perform the method according to each embodiment or some parts of the embodiments of the present invention.

The above embodiments are not intended to limit the protection scope of the technical solution. Any modification, equivalent replacement, and improvement made without departing from the spirit and principle of the above embodiments shall fall within the protection scope of the technical solution.

## Claims

1. A method supporting an application client being always online, wherein a long link is established between an always online engine AOE (101) located at a terminal (10) and an always online service gateway AOG (20) located at a network side, at least two application clients each communicate with one or more application servers (04, 05) through the long link, the method comprising:
providing, by a user management server (30) located at the network side, routing information for the AOE (101), wherein, the AOE (101) requests establishment of the long link according to the routing information; and the user management server (30) is further configured to provide authentication information for the AOG (20) during a process of establishing the long link.

2. The method according to claim 1, further comprising:
acquiring and storing, by the user management server (30), correspondence between terminal identity information and user identity information, and storing an address of a home AOG (20) of the user identity information;
when the AOE (101) sends a routing information request carrying the terminal identity information, providing, by the user management server (30), the AOE (101) with the address of the home AOG of the user identity information, according to stored correspondence between the terminal identity information and the user identity information, and the address of the home AOG of the user identity information; and
when the AOG (20) sends an authentication information request carrying the terminal identity information, providing, by the user management server (30), the AOG (20) with the user identity information, according to the correspondence between the terminal identity information and the user identity information.

3. The method according to any one of claims 1-2, the terminal identity information is IMSI information, and the user identity information is a cell phone number;
a process of the user management server (30) providing the routing information for the AOE (101) and providing the authentication information for the AOG (20) specifically comprises:
when the always online engine AOE (101) is started or it is detected that ISMI information in an SIM card is different from information registered last time, sending automatically, by the AOE (101), a reporting message to the user management server (30), wherein the reporting message carries the IMSI information and the cell phone number;
acquiring, by the user management server (30), the IMSI information and the cell phone number according to the received reporting message, and storing correspondence between the cell phone number and the IMSI information;
sending, by the AOE (101), a routing information request to the user management server (30), wherein the routing information request carries the IMSI information;
finding, by the user management server (30), a corresponding cell phone number according to the IMSI information in received routing information request, and returning an address of the home AOG (20) of the cell phone number to the AOE (101) according to a pre-stored address of the home AOG of the cell phone number;
initiating, by the always online engine AOE (101), a registration request to the home AOG (20) of the cell phone number, wherein the registration request carries the IMSI information;
after receiving the registration request of the AOE (101), determining, by the AOG (20), whether the IMSI information comprised in the registration request has been registered in the AOG (20), and if not registered, sending an authentication information request to the user management server (30), wherein the authentication information request carries the IMSI information that is in the registration request;
after receiving the authentication information request, returning, by the user management server (30), the cell phone number corresponding to the IMSI information according to stored correspondence between the cell phone number and the IMSI information; and
when the AOG (20) determines that the cell phone number is in a service range of the AOG (20), storing, by the AOG (20), the cell phone number, and returning a registration response to the AOE (101).

4. The method according to claim 3, wherein
the reporting message is a short message, and the reporting message carrying the IMSI information and the cell phone number specifically comprises that: content of the short message comprises the IMSI information, and a sender of the short message is the cell phone number.

5. The method according to any one of claims 1-2, the terminal identity information is terminal device identification, and the user identity information is a user name or user identification.

6. A system supporting an application client being always online, comprising:
an always online engine AOE (101), located in a terminal (10), and in communication connection with at least two application clients;
an always online service gateway AOG (20), located at a network side, and in communication connection with one or more application servers (04, 05) at the network side;
wherein the always online engine AOE (101) and the always online service gateway AOG (20) are configured to establish a long link, and the at least two application clients each communicate with the one or more application servers (04, 05) through the long link;
a user management server (30), located at the network side and in communication connection with the always online engine AOE (101) and the always online service gateway AOG (20), configured to provide routing information for the AOE (101), so that the AOE (101) requests establishment of the long link according to the routing information, and further provide authentication information for the AOG (20) during a process that the AOE (101) and the AOG (20) establish the long link.

7. The system according to claim 6, wherein
the user management server (30) is specifically configured to: acquire and store correspondence between terminal identity information and user identity information, and store an address of an home AOG (20) of the user identity information; when the AOE (101) sends a routing information request carrying the terminal identity information, provide the AOE (101) with the address of the home AOG of the user identity information according to the correspondence between the terminal identity information and the user identity information, and the address of the home AOG (20) of the user identity information,; and when the AOG (20) sends an authentication information request, provide the user identity information for the AOG (20) according to the correspondence between the terminal identity information and the user identity information.

8. The system according to any one of claims 5-6, wherein the terminal identity information is IMSI information, and the user identity information is a cell phone number;
the AOE (101) is specifically configured to: when the always online engine AOE (101) is started or it is detected that ISMI information in an SIM card is different from information registered last time, automatically send a reporting message to the user management server (30), wherein the reporting message carries the IMSI information and the cell phone number; send a routing information request to the user management server (30), wherein the routing information request carries the IMSI information; and initiate a registration request to the home AOG (20) of a received cell phone number, wherein the registration request carries the IMSI information;
the user management server (30) is specifically configured to: acquire the IMSI information and the cell phone number according to the received reporting message, store correspondence between the cell phone number and the IMSI information; find a corresponding cell phone number according to the IMSI information in received routing information request, and return an address of the home AOG (20) of the cell phone number to the AOE (101) according to a pre-stored address of the home AOG of the cell phone number; and after receiving the authentication information request, return the cell phone number corresponding to the IMSI information according to the stored correspondence between the cell phone number and the IMSI information;
the AOG (20) is specifically configured to: after receiving the registration request of the AOE (101), determine whether the IMSI information comprised in the registration request has been registered in the AOG (20), if not registered, send an authentication information request to the user management server (30), wherein the authentication information request carries the IMSI information that is in the registration request, and receive the returned cell phone number corresponding to the IMSI information; and when it is determined that the cell phone number is in a service range of the AOG (20), store the cell phone number, and return a registration response to the AOE (101).

9. The system according to claim 8, wherein
the reporting message is a short message, and the reporting message carrying the IMSI information and the cell phone number specifically comprises that: content of the short message comprises the IMSI information, and a sender of the short message is the cell phone number.

10. The system according to any one of claims 6-7, wherein the terminal identity information is terminal device identification, and the user identity information is a user name or user identification.

11. An always online engine AOE (101), located in a terminal (10), and in communication connection with at least two application clients; comprising:
a link management module (1011), configured to establish a long link between the AOE (101) and an always online service gateway AOG (20), wherein the at least two application clients each communicate with one or more application servers (04, 05) through the long link; acquire routing information from the user management server (30), and request establishment of the long link according to the routing information.

12. The AOE (101) according to claim 11, wherein
the link management module (1011) is specifically configured to send a routing information request comprising terminal identity information to the user management server (30), receive an address of an AOG returned by the user management server (30), according to a stored correspondence between the terminal identity information and user identity information, and the address of the home AOG of the user identity information

13. The AOE (101) according to claim 11 or 12, wherein the terminal identity information is IMSI information, the user identity information is a cell phone number; and
the link management module is specifically configured to: when the always online engine AOE (101) is started or it is detected that ISMI information in an SIM card is different from information registered last time, automatically send a reporting message to the user management server (30), wherein the reporting message carries the IMSI information and the cell phone number; send a routing information request to the user management server (30), wherein the routing information request carries the IMSI information; and initiate a registration request to the home AOG (20) of a received cell phone number, wherein the registration request carries the IMSI information.

14. The AOE (101) according to any one of claims 11-13, wherein
the reporting message is a short message, and the reporting message carrying the IMSI information and the cell phone number specifically comprises that: content of the short message comprises the IMSI information, and a sender of the short message is the cell phone number.

15. The AOE (101) according to any one of claims 11-14, wherein the terminal identity information is terminal device identification, and the user identity information is a user name or user identification.

16. An always online service gateway AOG (20), located at a network side and in communication connection with one or more application servers (04, 05) at the network side;
the AOG (20) comprising:
a terminal management module (2011), configured to establish a long link between an always online engine AOE (101) and the AOG (20), wherein at least two application clients each communicate with the one or more application servers (04, 05) through the long link; and acquire authentication information from a user management server (103) during a process of establishing the long link.

17. The AOG (20) according to claim 16, wherein
the terminal management module (2011) is specifically configured to: send, to the user management server (30), an authentication information request carrying terminal identity information, and receive the user identity information that is returned by the user management server (30) according to correspondence between the terminal identity information and the user identity information.

18. The AOG (20) according to claim 17, wherein the terminal identity information is IMSI information, the user identity information is a cell phone number; and
the terminal management module (2011), specifically, after receiving a registration request of the AOE (101), determines whether IMSI information comprised in the registration request has been registered in the AOG (20), if not registered, sends the authentication information request to the user management server (30), wherein the authentication information request carries the IMSI information, and receive a returned cell phone number corresponding to the IMSI information; and when it is determined that the cell phone number is in a service range of the AOG (20), the AOG (20) stores the cell phone number, and returns a registration response to the AOE (101).

19. The AOG (20) according to claim 16 or 17, wherein the terminal identity information is terminal device identification, and the user identity information is a user name or user identification.

20. A user management server (30), located at a network side, and in communication connection with an always online engine AOE (101) and an always online service gateway AOG (20), wherein at least two application clients each communicate with the one or more application servers (04, 05) through an long link, the user management server (30) comprising:
a routing information module (3012), configured to provide routing information to the AOE (101), so as to request establishment of the long link according to the routing information; and
an authentication information module (3013), configured to provide authentication information to the AOG (20) during a process that the AOE (101) and the AOG (20) establish the long link.

21. The user management server (30) according to claim 20, wherein
the user management server (30) further comprises a registration management module (3011), configured to acquire and store correspondence between terminal identity information and user identity information, and store an address of a home AOG (20) of the user identity information;
the routing information module (3012) is specifically configured to provide the AOE (101) with the address of the home AOG of the user identity information according to the terminal identity information in the routing information request sent by the AOE (101), and the correspondence between the terminal identity information and the user identity information, wherein the correspondence is acquired and stored by the registration management module; and
the authentication information module (3013) is specifically configured to: when the AOG (20) sends the authentication information request, provide the AOG (20) with the user identity information according to the terminal identity information in the authentication information request, and the correspondence between the terminal identity information and the user identity information, wherein the correspondence is acquired and stored by the registration management module.

22. The user management server (30) according to claim 21, wherein the terminal identity information is IMSI information, the user identity information is a cell phone number;
the registration management module (3011) is specifically configured to: acquire the IMSI information and the cell phone number according to a reporting message sent by the AOE (101), and store correspondence between the cell phone number and the IMSI information;
the routing information module (3012) is specifically configured to: find a corresponding cell phone number according to the IMSI information in received routing information request, and return the address of the home AOG (20) of the cell phone number to the AOE (101) according to a pre-stored address of the home AOG of the cell phone number; and
the authentication information module (3013) is specifically configured to: after receiving the authentication information request comprising the IMSI information, return the cell phone number corresponding to the IMSI information according to stored correspondence between the cell phone number and the IMSI information.

23. The user management server (30) according to claim 22, wherein
the reporting message is a short message, content of the short message comprises the IMSI information, a sender of the short message is the cell phone number; and
the registration management module is specifically configured to: acquire the IMSI information according to the content of the short message, acquire the cell phone number according to the sender of the short message, and store the correspondence between the cell phone number and the IMSI information.

24. The user management server (30) according to claim 21, wherein the terminal identity information is terminal device identification, and the user identity information is a user name or user identification.
